# EUROPEAN PATENT APPLICATION

(11) **EP 2 555 388 A2**
(43) Date of publication of application: **06.02.2013**
(21) Application number: 12176437.7
(22) Date of filing: 13.07.2012
(51) Int. Cl.: H02K 3/30, H02K 3/38

(54) **Electric machine module conductor system**

(30) Priority: 02.08.2011 US 201161514181 P
(71) Applicant: Remy Technologies, LLC, Pendleton, IN 46064 (US)
(72) Inventor: Randolph, Daniel, Indianapolis, IN 46205 (US); Trammell, Richard Eugene, Noblesville, IN 46060 (US); Hamer, Colin, Noblesville, IN 46060 (US)
(74) Representative: Bauer Vorberg Kayser Patentanwälte

(57) **Abstract**

An electric machine module is disclosed comprising a housing at least partially defining a machine cavity and an electric machine at least partially positioned within the machine cavity and at least partially enclosed by the housing. The electric machine includes a stator assembly including a stator core and a stator winding. The stator winding comprises a plurality of conductors, and the plurality of conductors comprise a first insulation. At least one insulation member is disposed over at least a portion of plurality of conductors, the insulation member comprising a first element and a second element. The first element is positioned within the second element, wherein the first element and the second element comprise different materials comprising different properties.

## Description

### BACKGROUND

Some conventional electric machines include a stator assembly disposed around a rotor assembly. Some stator assemblies include a plurality of conductors positioned within a stator core. During operation of some electric machines, a current flows through at least some of the conductors. In order to prevent potential short circuit events and or grounding incidents, some conventional configurations for stator assemblies require multiple insulation layers between and amongst the conductors.

### DESCRIPTION OF THE DRAWINGS

FIG. 1 is a perspective view of an electric machine module according to one embodiment of the invention.
FIG. 2 is a perspective view of a stator assembly according to one embodiment of the invention.
FIG 3 is front view of a stator lamination according to one embodiment of the invention.
FIG. 4 is a perspective view of a conductor according to one embodiment of the invention.
FIG. 5 is a perspective view of a portion of a stator assembly according to one embodiment of the invention.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives that fall within the scope of embodiments of the invention.

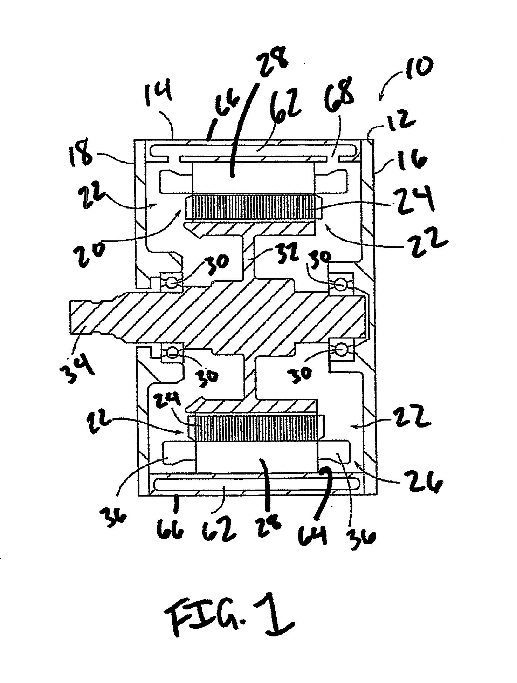

FIG. 1 illustrates an electric machine module 10 according to one embodiment of the invention. The module 10 can include a module housing 12 comprising a sleeve member 14, a first end cap 16, and a second end cap 18. An electric machine 20 can be housed within a machine cavity 22 at least partially defined by the sleeve member 14 and the end caps 16, 18. For example, the sleeve member 14 and the end caps 16, 18 can be coupled via conventional fasteners (not shown), or another suitable coupling method, to enclose at least a portion of the electric machine 20 within the machine cavity 22. In some embodiments the housing 12 can comprise a substantially cylindrical canister and a single end cap (not shown). Further, in some embodiments, the module housing 12, including the sleeve member 14 and the end caps 16, 18, can be fabricated from materials that can generally include thermally conductive properties, such as, but not limited to aluminum or other metals and materials capable of generally withstanding operating temperatures of the electric machine. In some embodiments, the housing 12 can be fabricated using different methods including casting, molding, extruding, and other similar manufacturing methods.

The electric machine 20 can be, without limitation, an electric motor, such as a hybrid electric motor, an electric generator, or a vehicle alternator. In one embodiment, the electric machine 20 can be a High Voltage Hairpin (HVH) electric motor or an interior permanent magnet electric motor for hybrid vehicle applications.

The electric machine 20 can include a rotor assembly 24, a stator assembly 26, and bearings 30, and can be disposed about an output shaft 34. As shown in FIG. 1, the stator assembly 26 can substantially circumscribe the rotor 24. In some embodiments, the rotor assembly 24 can also include a rotor hub 32 or can have a "hub-less" design (not shown).

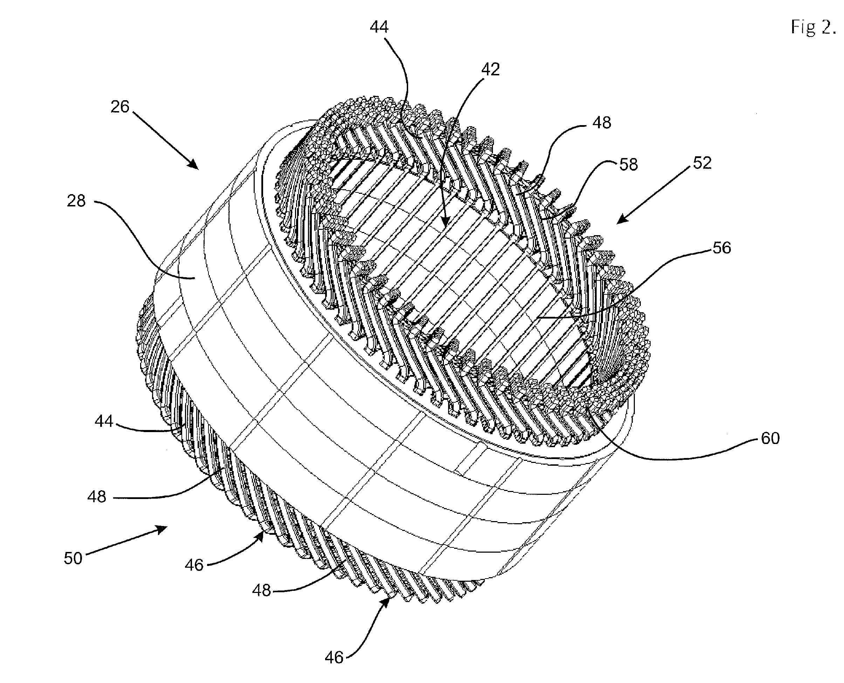

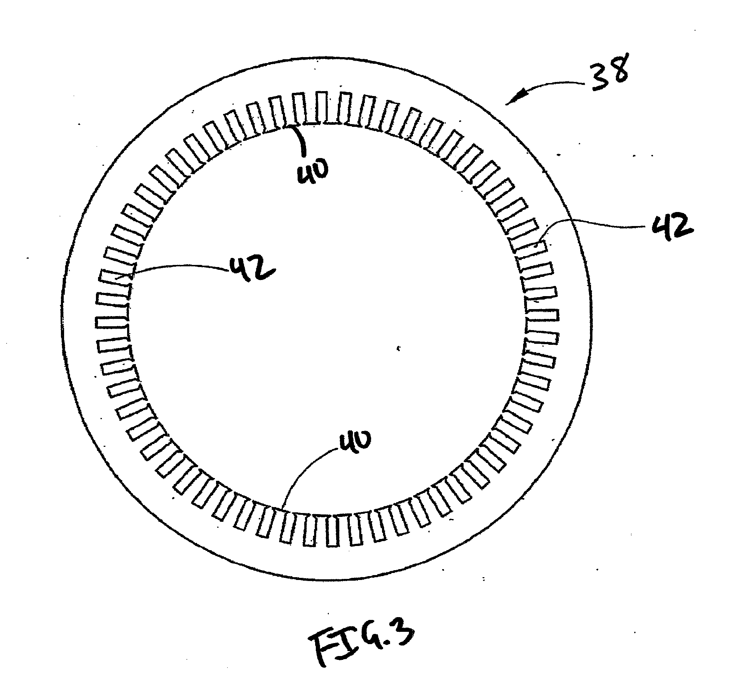

As shown in FIG. 2, in some embodiments, the stator assembly 26 can comprise a stator core 28 and a stator winding 36 at least partially disposed within a portion of the stator core 28. For example, in some embodiments, the stator core 28 can comprise a plurality of laminations 38. Referring to FIG. 3, in some embodiments, the laminations 38 can comprise a plurality of substantially radially-oriented teeth 40. In some embodiments, as shown in FIG. 2, when at least a portion of the plurality of laminations 38 are substantially assembled, the teeth 40 can substantially align to define a plurality of slots 42 that are configured and arranged to support at least a portion of the stator winding 36. As shown in FIG. 3, in some embodiments, the laminations 38 can include sixty teeth 40, and, as a result, the stator core 28 can include sixty slots 42. In other embodiments, the laminations 38 can include more or fewer teeth 40, and, accordingly, the stator core 28 can include more or fewer slots 42.

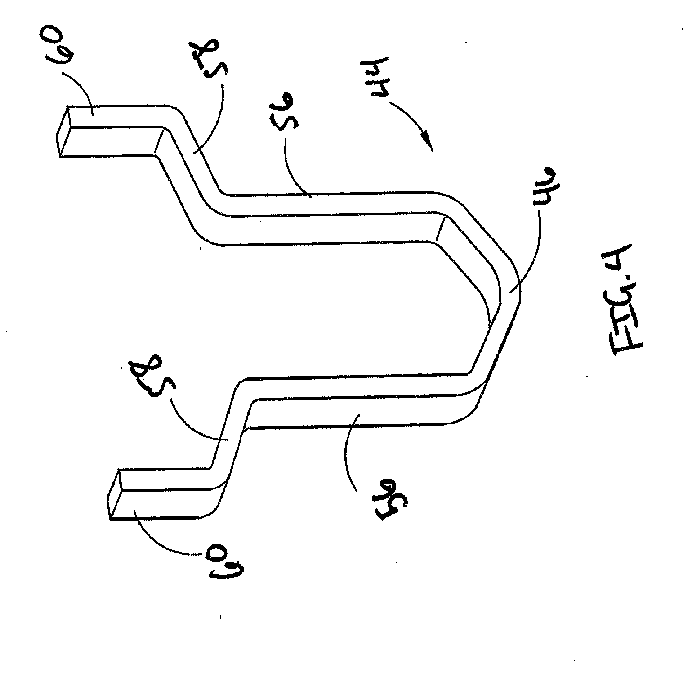

In some embodiments, the stator winding 36 can comprise a plurality of conductors 44. In some embodiments, the conductor 44 can comprise a substantially segmented configuration (e.g., a hairpin configuration), as shown in FIG. 4. For example, in some embodiments, at least a portion of the conductors 44 can include a tum portion 46 and at least two leg portions 48. In some embodiments, the tum portion 46 can be disposed between the two leg portions 48 to substantially connect the two leg portions 48. In some embodiments, the leg portions 48 can be substantially parallel. Moreover, in some embodiments, the tum portion 46 can comprise a substantially "u-shaped" configuration, although, in some embodiments, the tum portion 46 can comprise a v-shape, a wavy shape, a curved shape, and other shapes. Additionally, in some embodiments, as shown in FIG. 4, at least a portion of the conductors 44 can comprise a substantially rectangular cross section. In some embodiments, at least a portion of the conductors 44 can comprise other cross-sectional shapes, such as substantially circular, square, hemispherical, regular or irregular polygonal, etc.

In some embodiments, as shown in FIG. 2, at least a portion of the conductors 44 can be positioned substantially within the slots 42. For example, in some embodiments, the stator core 28 can be configured so that the plurality of slots 42 are substantially axially arranged. In some embodiments, the leg portions 48 can be inserted into the slots 42 so that at least some of the leg portions 48 can axially extend through the stator core 28. In some embodiments, the leg portions 48 can be inserted into neighboring slots 42. For example, in some embodiments, the leg portions 48 of a conductor 44 can be disposed in slots that are distanced approximately one magnetic-pole pitch apart (e.g., six slots, eight slots, etc.). In some embodiments, a plurality of conductors 44 can be disposed in the stator core 28 so that at least some of the tum portions 46 of the conductors 44 axially extend from the stator core 28 at an insertion end 50 of the stator core 28 and at least some of the leg portions 48 axially extend from the stator core 28 at a weld end 52 of the stator core 28.

In some embodiments, the conductors 44 are generally fabricated from a substantially linear conductor 44 that can be configured and arranged to a shape substantially similar to the conductor in FIG. 4. For example, in some embodiments, a machine (not shown) can apply a force (e.g., bend, push, pull, other otherwise actuate) to at least a portion of a conductor 44 to substantially form the turn portion 46 and the two leg portions 48 of a single conductor 44.

In some embodiments, before, during, and/or after shaping of the conductors 44, a first insulation 54 can be applied to at least a portion the conductors 44. For example, in some embodiments, the first insulation 54 can comprise a resinous material such as an epoxy or an enamel that can be reversibly or irreversibly coupled to at least a portion of the conductors 44. In some embodiments, because an electrical current circulates through the conductors 44 during operation of the electric machine 20, the first insulation 54 can function, at least in part, to substantially prevent short circuits and/or grounding events between neighboring conductors 44 and/or conductors 44 and the stator core 28.

In some embodiments, at least some of the leg portions 48 can comprise multiple regions. In some embodiments, the leg portions 48 can comprise in-slot portions 56, angled portions 58, and connection portions 60. In some embodiments, as previously mentioned, the leg portions 48 can be disposed in the slots 42 and can axially extend from the insertion end 50 to the weld end 52. In some embodiments, after insertion, at least a portion of the leg portions 48 positioned within the slots 42 can comprise the in-slot portions 56.

In some embodiments, at least some of a region of the leg portions 48 extending from stator core 28 at the weld end 52 can comprise the angled portions 58 and the connection portions 60. In some embodiments, after inserting the conductors 44 into the stator core 28, the leg portions 48 extending from the stator core 28 at the weld end 52 can undergo a twisting process (not shown) which can lead to the creation of the angled portions 58 and the connection portions 60. For example, in some embodiments, the twisting process can give rise to the angled portions 58 at a more axially inward position and the connection portions 60 at a more axially outward position, as shown in FIGS. 2 and 4. In some embodiments, after the twisting process, the connection portions 60 of at least a portion of the conductors 44 can be immediately adjacent to connection portions 60 of other conductors 44. As a result, the connection portions 60 can be coupled together to form one or more stator windings 36. In some embodiments, the connection portions 60 can be coupled via welding, brazing, soldering, melting, adhesives, or other coupling methods. Additionally, in some embodiments, at least a portion of the first insulation 54 can be substantially removed at the connection portions 60 in order to enable the coupling process. Although, in some embodiments, the first insulation 54 can be applied to the conductors 44 so that it does not coat and/or cover the connection portions 60.

In some embodiments, the module 10 can comprise a plurality of electrical phases. For example, in some embodiments, the module 10 can comprise three phases for enhanced operations of the electric machine 20. As a result, in some embodiments, the connection portions 60 can be connected to neighboring connection portions 60 so that they are configured and arranged to form three different electrical phases. Furthermore, in some embodiments, each of the phases can be connected to a terminal 62. For example, in some embodiments, the stator assembly 26 can comprise a terminal region 64 and the terminal region 64 can be configured and arranged so that each phase can be coupled to a different terminal 62 (i.e., a stator assembly 26 including three phases can include three terminals 62).

In some embodiments, the terminal region 64 can comprise a plurality of conductors 44 configured in alternative manners. For example, in some embodiments, in order to connect the conductors 44 in a desired configuration (e.g., a three-phase winding 36), at least a portion of the conductors 44 can be bent, pushed, pulled, other otherwise actuated to give rise to forms that can fit within the module 10. In some embodiments, during the life of the module 10, at least some conductors 44 can contact other conductors 44, the stator core 38, the housing 12, and other elements of the module 10, which can cause wear upon the conductors 44. For example, in some conventional electric machines, the wear can lead to the breakdown of the first insulation 54 so that, over time, a bare portion of the conductor 44 can be exposed, which can lead to grounding events and/or potential short circuits.

In order to at least partially reduce the risk of short circuit and/or grounding events due to conductor 44 wear, in some embodiments, at least a portion of the stator assembly 26 can comprise a second insulation 66. In some embodiments, the second insulation 66 can comprise different configurations. For example, in some embodiments, the second insulation 66 can comprise a tape, a dip, a varnish, a single-layered insulation member, a compound insulation member, or other insulation configurations.

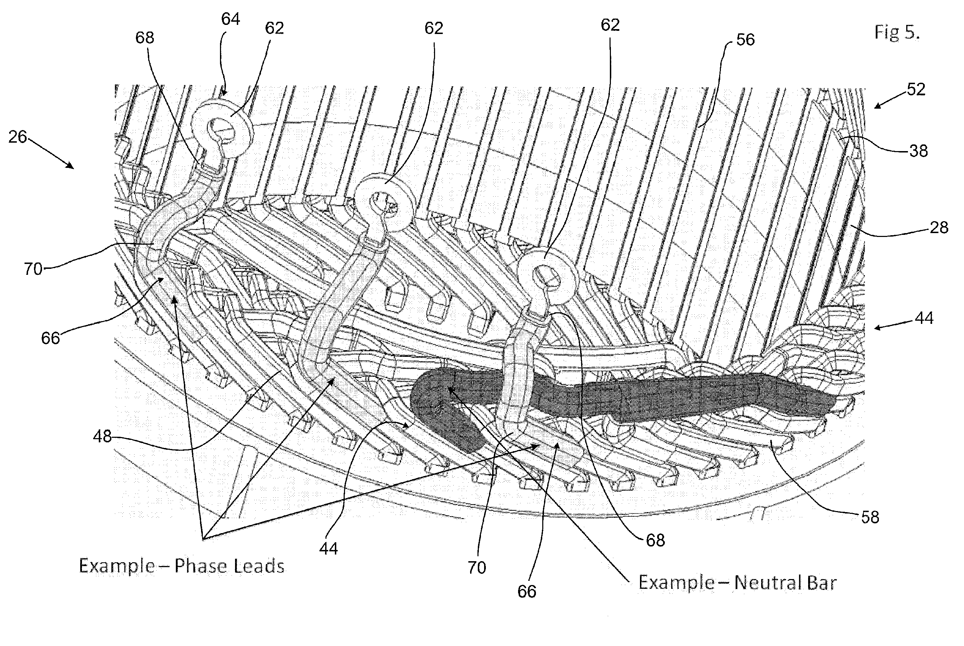

By way of example only, in some embodiments, the second insulation 66 can comprise a compound insulation member. In some embodiments, the compound insulation member can comprise at least a first element 68 reversibly or irreversibly coupled to a second element 70, as described in further detail below. In some embodiments, the second insulation 66 can be positioned over and/or around some portions of the conductors 44 and/or terminals 62. For example, as shown in FIG. 5, in some embodiments, the second insulation 66 can be positioned over some regions of the leg portions 48 so that during the life span of the module 10, short circuits and/or grounding events stemming from contact of the conductors 44 with neighboring conductors 44 can be at least partially reduced.

Moreover, in some embodiments, at least a portion of the conductors 44 can comprise the second insulation 66 where the conductors 44 change direction (e.g., a bend in the conductors44) to at least partially compensate for any weaknesses in the first insulation 54. For example, in some embodiments, as previously mentioned, the conductors 44 can be bent, angled, moved, or otherwise actuated to fit within the housing 12 and to enable configuration of the stator winding 36. As a result, in some embodiments, the first insulation 54 covering the portion of the conductors 44 that receives the actuation (i.e., the bent region) can be at least partially weakened by the actuation process. Accordingly, over time, the structural integrity of the first insulation 54 at that region can be reduced, which can lead to an increased risk of ground events and/or short circuits because of the exposed conductor 44.

In some embodiments, the second insulation 66 can be configured and arranged to at least partially enhance insulation of the stator assembly 26. As previously mentioned, in some embodiments, the second insulation 66 can include at least two elements, although, in other embodiments, the second insulation 66 can comprise more than two elements. For example, in some embodiments, the second insulation 66 can comprise the first element 68 operatively coupled to the second element 70. In some embodiments, as detailed below, the first and the second elements 68, 70 can comprise different materials that can include different properties.

In some embodiments, the first element 68 can comprise different materials. In some embodiments, the first element 68 can comprise fiberglass, Kevlar®, Nomex®, polyamide, polyimide, any organic (e.g., silk and/or cotton) or inorganic fibers, other constituents capable of providing physical, electrical, thermal, and/or chemical insulation, or any combination thereof. Moreover, in some embodiments, the first element 68 can comprise a material capable of being spun like a fiber. By way of example only, in some embodiments, the first element 68 can comprise fiberglass that has been woven to form a sleeve-like structure. Moreover, in some embodiments, the first element 68 can comprise a plurality of layers coupled together to form the first element 68. In some embodiments, the first element 68 can be configured and arranged so that at least a portion of at least one of the conductors 44 can extend through a portion of the first element 68 (e.g., the first element can comprise a sleeve structure).

In some embodiments, the second element 70 can comprise different materials. In some embodiments, the second element 70 can comprise fiberglass, Kevlar®, Nomex®, polyamide, polyimide, any organic (e.g., silk and/or cotton) or inorganic fibers, other constituents capable of providing physical, electrical, thermal, and/or chemical insulation, or any combination thereof. Moreover, in some embodiments, the first element 70 can comprise a material capable of being spun like a fiber or can be spun into a fiber. By way of example only, in some embodiments, the second element 70 can comprise Kevlar® that has been woven to form a sleeve-like structure. Moreover, in some embodiments, the second element 70 can comprise a plurality of layers coupled together to form the second element 70. In some embodiments, the second element 70 can be configured and arranged so that at least a portion of the first element 68 can be positioned within the second element 70.

In some embodiments, the first and the second elements 68, 70 can comprise other configurations. For example, in some embodiments, the first element 68 can comprise Nomex® and the second element 70 can comprise Kevlar®, polyamide, or any other material. Moreover, in some embodiments, the selection of the materials used in fabrication of the elements 68, 70 can be at least partially correlated with the desired insulative capacities of the materials. For example, in some embodiments, Kevlar® can at least partially enhance the abrasion resistance of the second insulation 66. In some embodiments, Nomex® can enhance heat resistance and polyamide can at least partially improve the dielectric strength of the second insulation 66. In some embodiments, any other materials capable of providing desired insulation in the environment of the machine cavity 22 can be used in fabricating the second insulation 66.

In some embodiments, the first and the second elements 68, 70 can be coupled together to form the second insulation 66. The first and the second elements 68, 70 can be coupled in different manners, including, but not limited to adhesives, conventional fasteners, interference fitting, etc. By way of example only, in some embodiments, the first and the second elements 68, 70 can be coupled together via an adhesive. In some embodiments, after fabrication of at least a portion of the elements 68, 70, the adhesive can be applied to an outer perimeter of the first element 68 and/or an inner perimeter of the second element 70 to aid in the coupling process. In some embodiments, after applying the adhesive, the first and the second elements 68, 70 can be exposed to an environment including an elevated temperature, which can lead to curing of the adhesive. As a result, in some embodiments, the first and the second elements 68, 70 can be coupled together (i.e., bonded) to form the second insulation 66. In some embodiments, the adhesive can comprise a non-silicone composition so that the adhesive does not interfere with any module 10 operations, including coolant circulation.

Moreover, in some embodiments, the first element 68 can be coupled to the second element 70 prior to positioning on the stator winding 36, although, in other embodiments, the first element 68 can be positioned over at least a portion of a conductor 44 and the second element 70 can then be coupled to the first element 68. In some embodiments, the second insulation 66 can be positioned over portions of conductors 44 at the terminal region 62, although, in other embodiments, the second insulation 66 can be positioned over any other portions of any other conductors 44 of the stator winding 36. Additionally, in some embodiments, at least a portion of the second insulation 66 can be positioned prior to insertion of a portion of the conductors 44 within the slots 42. For example, in some embodiments, the second insulation 66 can be positioned of a portion of some of the conductors 44 and then the conductors 44 can be placed in position for completion of the stator winding 36. Moreover, in some embodiments, the second insulation 66 can be positioned after the conductors 44 are positioned to form the stator winding 36.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the invention.

## Claims

1. An electric machine module comprising:
a housing at least partially defining a machine cavity;
an electric machine at least partially positioned within the machine cavity and at least partially enclosed by the housing, the electric machine including a stator assembly including a stator core and a stator winding, the stator winding comprising a plurality of conductors, and the plurality of conductors comprising a first insulation; and
at least one insulation member being disposed over at least a portion of plurality of conductors, the insulation member comprising a first element and a second element, the first element being positioned within the second element, and wherein the first element and the second element comprise different materials comprising different properties.

2. The electric machine module of claim 1, wherein the first insulation comprises a resinous material.

3. The electric machine module of claim 1, wherein the stator core comprises a plurality of slots and at least some of the plurality of conductors are positioned within the plurality of slots.

4. The electric machine module of claim 3 and further comprising at least one slot member disposed within each of the plurality of slots, and wherein at least some portions of the plurality of conductors are positioned within the slot members.

5. The electric machine module of claim 1, wherein the first element comprises at least one of fiberglass, Kevlar®, Nomex®, polyamide, polyimide, silk, cotton, an organic fiber, and an inorganic fibers.

6. The electric machine module of claim 5, wherein the second element comprises at least one of fiberglass, Kevlar®, Nomex®, polyamide, polyimide, silk, cotton, an organic fiber, and an inorganic fibers.

7. The electric machine module of claim 1, wherein the first element comprises a plurality of woven layers of fiberglass.

8. The electric machine module of claim 7, wherein the second element comprises a plurality of woven layers of at least one of Kevlar®, Nomex®, and polyamide.

9. The electric machine module of claim 1, wherein stator winding comprises a terminal region, and wherein the terminal region comprises a plurality of terminal region conductors that are differently configured than the plurality of conductors.

10. The electric machine module of claim 9, wherein the terminal region conductors comprise a plurality of insulation members.

11. The electric machine module of claim 1, wherein the housing comprises at least a portion of a coolant jacket that is in fluid communication with the machine cavity.

12. An electric machine module comprising:
a housing including a machine cavity and at least a portion of a coolant jacket that is in fluid communication with the machine cavity;
an electric machine being at least partially positioned within the machine cavity and at least partially enclosed by the housing, the electric machine including a stator assembly including a stator winding, the stator winding comprising a plurality of conductors, and the plurality of conductors comprising a first insulation; and
at least one insulation member being disposed over at least a portion of plurality of conductors, the insulation member comprising a first element and a second element, the first element being coupled to the second element using an adhesive, the first element and the second element each comprising at least one of fiberglass, Kevlar®, Nomex®, polyamide, polyimide, silk, cotton, an organic fiber, and an inorganic fibers, and wherein the first element and the second element comprise different materials.

13. The electric machine module of claim 12, wherein the stator assembly is positioned within the housing so that the coolant jacket circumscribes at least a portion of the stator assembly.

14. The electric machine module of claim 12, wherein the first insulation comprises a resinous material.

15. The electric machine module of claim 12, wherein the stator assembly comprises a plurality of slots and at least some of the plurality of conductors are positioned within the plurality of slots.

16. The electric machine module of claim 15 and further comprising at least one slot member disposed within each of the plurality of slots, and wherein at least some portions of the plurality of conductors are positioned within the slot members.

17. The electric machine module of claim 12, wherein stator winding comprises a terminal region, and wherein the terminal region comprises a plurality of terminal region conductors that are differently configured than the plurality conductors.

18. The electric machine module of claim 17, wherein only the terminal region conductors comprise insulation members.

19. A method of assembling a stator assembly, the method comprising:
providing a plurality of stator laminations including a plurality of teeth;
coupling together at least a portion of the plurality of stator laminations so that the plurality of teeth substantially axially align to form a plurality of slots and the laminations form a stator core;
disposing at least one slot member within each of the plurality of slots;
assembling a first element from at least one of fiberglass, Kevlar®, Nomex®, polyamide, polyimide, silk, cotton, an organic fiber, and an inorganic fibers;
assembling a second element from at least one of fiberglass, Kevlar®, Nomex®, polyamide, polyimide, silk, cotton, an organic fiber, and an inorganic fibers, wherein the second element and the first element comprise different materials;
coupling together an outer diameter of the first element and an inner diameter of the second element using an adhesive to form at least one insulation member;
disposing at least one insulation member over at least one conductor so that that the first element is immediately adjacent to an outer surface of the at least one conductor; and
forming a stator winding at least partially supported by the stator core, the stator winding including the at least one conductor and the at least one insulation member.

20. The method of claim 19, wherein the first element comprises woven fiberglass and the second element comprises at least one of Kevlar®, Nomex®, and polyamide.
